# NEUE EUROPÄISCHE PATENTSCHRIFT

(11) **EP 3 829 946 B2**
(45) Veröffentlichungstag und Bekanntmachung des Hinweises auf die Entscheidung über den Einspruch: **24.12.2025**
(45) Hinweis auf die Patenterteilung: 07.09.2022
(21) Anmeldenummer: 19735263.6
(22) Anmeldetag: 27.06.2019
(51) Int. Cl.: B60T 13/26, B60T 13/68

(54) **ELEKTRO-PNEUMATISCHE HANDBREMSE (EPH) MIT TEILWEISE ENTKOPPELTEN TCV (EUROPÄISCHE ANSTEUERUNG)**
ELECTRO-PNEUMATIC HAND BRAKE (EBH) WITH PARTLY DECOUPLED TCV (EUROPEAN CONTROL TYPE)
FREIN À MAIN ÉLECTROPNEUMATIQUE (EBH) AVEC TCV PARTIELLEMENT DECOUPLÉ (TYPE D'ACTIVATION EUROPÉEN)

(30) Priorität: 02.08.2018 DE 102018118745
(43) Veröffentlichungstag der Anmeldung: 09.06.2021
(73) Patentinhaber: ZF CV Systems Europe BV, 1170 Brussels (BE)
(72) Erfinder: VAN THIEL, Julian, 30938 Großburgwedel (DE)
(74) Vertreter: Eisenführ Speiser
(86) Internationale Anmeldenummer: PCT/EP2019/067107
(87) Internationale Veröffentlichungsnummer: WO 2020/025225

(56) Entgegenhaltungen:
- EP-A1- 1 785 325
- EP-A1- 3 112 231
- EP-A1- 3 112 231
- WO-A1-2018/172394
- WO-A2-2009/152982
- DE-A1- 102004 021 242
- DE-A1- 102004 021 242
- DE-A1- 102005 058 799
- DE-A1- 102007 047 692
- DE-A1- 102012 000 435
- DE-A1- 102012 013 959
- DE-A1- 102013 000 275
- DE-A1- 102014 107 218
- DE-A1- 102015 008 377
- DE-A1- 102015 106 145
- DE-A1- 102015 107 125
- DE-A1- 102015 112 490
- DE-A1- 19 935 979
- DE-B4- 102004 021 242

## Beschreibung

Die Erfindung betrifft ein elektropneumatisches Steuermodul für ein elektronisch steuerbares pneumatisches Bremssystem für einen Fahrzeugzug mit einem Zugwagen und einem Anhänger, mit einem pneumatischen Vorratsanschluss, der mit einem Druckluftvorrat verbindbar ist, und einem Entlüftungsanschluss, der mit einer Entlüftung verbunden ist, einer Anhängersteuereinheit (TCV), die eine Anhängersteuer-Ventileinheit, einen Anhängerbremsdruckanschluss und einen Anhängerversorgungsdruckanschluss aufweist, einer Feststellbremseinheit (EPH), die einen Federspeicher-Anschluss für mindestens eine Federspeicherbremse für den Zugwagen und eine Feststellbrems-Ventileinheit aufweist, und einer elektronischen Steuereinheit (ECU) zum Steuern der Anhängersteuer-Ventileinheit und der Feststellbrems-Ventileinheit.

In Fahrzeugen, insbesondere Nutzfahrzeugen, mit einem pneumatischen Bremssystem, insbesondere ausgebildet als elektronisches Bremssystem (EBS) oder Antiblockiersystem (ABS) können zum Aussteuern von Bremsdrücken von einer Steuereinheit (ECU) elektropneumatische Ventile, beispielsweise Relaisventilen vorgeschaltete elektropneumatische Umschaltventile z.B. 3/2-Wegeventil oder Achsmodulatoren, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten.

Bei Bremssystemen für einen Fahrzeugzug weist das Bremssystem eine Anhängersteuereinheit, auch Trailer Control Valve (TCV) genannt, auf, die dazu vorgesehen ist, die von dem Zugwagen vorgegebenen Fahrzeug-Soll-Verzögerungen entsprechend auch über Anschlüsse, nämlich einen Anhängerbremsdruckanschluss und einen Anhängerversorgungsdruckanschluss, die auch als gelber und roter Kupplungskopf bezeichnet werden, pneumatisch auszusteuern. Über den Anhängerversorgungsdruckanschluss wird der Anhängerwagen mit einem Versorgungsdruck aus einem dafür vorgesehenen Vorrat des Zugwagens versorgt, während über den Anhängerbremsdruckanschluss der entsprechende Bremsdruck ausgesteuert wird.

Als ein weiteres Bauteil oder Modul weisen Bremssysteme der vorstehenden Gattung eine Feststellbremseinheit, auch als elektropneumatische Handbremse (EPH) bezeichnet, auf. Solche Feststellbremseinheiten werden üblicherweise mit sogenannten Federspeichern betrieben, also Bremseinrichtungen, die aufgrund einer Federkraft eine oder mehrere Achsen des Zufahrzeugs bremsen. Im belüfteten Zustand sind die Bremsen gelöst und im entlüfteten Zustand zugespannt. In einem drucklosen Zustand wird das entsprechende Fahrzeug also gebremst. Zur Aktivierung der Feststellbremseinheit ist in der Regel in der Fahrerkabine des Zugwagens ein elektrischer Schalter vorgesehen, über den ein entsprechendes Signal an eine elektronische Steuereinheit ausgebbar ist, die dann ein oder mehrere elektropneumatische Ventile so schaltet, dass die Federspeicher entweder ent- oder belüftet werden.

Die Feststellbremseinheit, also die elektropneumatische Handbremse, wird zum Parken des Fahrzeugzugs, aber auch als Zusatzbremse in besonderen Situationen verwendet. Das heißt, neben dem normalen Betriebsbremsen werden die Federspeicher wenigstens teilweise entlüftet, um diese zusätzlich oder alternativ zur Bremsung zu verwenden. So wird z.B. bei einem reinen Hilfsbremsen ausschließlich über Federspeicher im Zugfahrzeug und Betriebsbremsen im Anhängerwagen gebremst. Die Betriebsbremsen im Zugfahrzeug sind beim reinen Hilfsbremsen unbetätigt. Alternativ kann auch ein Redundanzmodus umgesetzt werden, wo z.B. bei einem Kreisausfall an der Hinterachse alternativ zu den Betriebsbremsen die Federspeicher zur Hilfe genommen werden. Die Vorderachse kann weiterhin über Betriebsbremsen gebremst werden, und der Anhängerwagen ebenfalls über Betriebsbremsen.

Um hier ein entsprechendes Bremssignal auch für den Anhängerwagen pneumatisch auszusteuern, wird in der Regel ein sogenanntes inverses Relaisventil verwendet, welches basierend auf einem sinkenden Druck in den Federspeichern einen steigenden Druck aussteuert. Solche inversen Relaisventile sind in ihrer Bauart aufwendig und weisen häufig mehrere Steuerkolben auf, die über verschiedene Steuerflächen und verschiedene Steuerkammern miteinander interagieren.

Ferner wird bei Bremssystemen der eingangs genannten Art zwischen der sogenannten "europäischen Anhängersteuerung" und der "skandinavischen Anhängersteuerung" unterschieden. Während bei der "europäischen Anhängersteuerung" im abgestellten Zustand des Fahrzeugzugs ein den entlüfteten Federspeichern entsprechender positiver Bremsdruck an dem Anhängerwagen ausgesteuert wird, um diesen zusätzlich zu bremsen, ist bei der "skandinavischen Anhängersteuerung" das Gegenteil der Fall: Im abgestellten Zustand des Fahrzeugzugs sollen die Betriebsbremsen des Anhängerwagens gelöst sein. Das bedeutet, bei der "europäischen Anhängersteuerung" muss im abgestellten Zustand des Fahrzeugzugs, also im stromlosen Zustand, permanent ein positiver Bremsdruck über die Anhängersteuereinheit (TCV) an die Betriebsbremsen des Anhängerwagens ausgesteuert werden.

Da in der Praxis also die Anhängersteuereinheit (TCV) und die Feststellbremseinheit (EPH) interagieren, hat sich eine Integration dieser beiden Module als wünschenswert herausgestellt. Ein erster Ansatz der Integration ist beispielsweise in DE 10 2016 003 034 A1 offenbart. Während früher die Feststellbremseinheit (EPH) häufig in eine Druckluftaufbereitungseinheit integriert wurde, schlägt DE 10 2016 003 034 A1 vor, die Feststellbremseinheit (EPH) in die Anhängersteuereinheit (TCV) zu integrieren. Dies ermögliche eine besonders einfache Integration der elektropneumatischen Komponenten in das Fahrzeug. Entsprechendes solle gelten, wenn die Steuereinrichtung zumindest teilweise in einer solchen Anhängereinrichtung integriert sei.

Auf ähnliche Weise schlägt auch DE 10 2008 014 458 A1 der hiesigen Anmelderin eine elektropneumatische Einrichtung vor, insbesondere eine Luftaufbereitungseinrichtung, einen Achsmodulator, ein Anhängersteuerventil, eine Steuereinrichtung eines elektronischen Bremssystems oder eine Fahrdynamikregelungseinrichtung, und/oder eine elektropneumatische Einrichtung des Fahrzeugs, insbesondere eine Luftaufbereitungseinrichtung oder eine Luftfederungseinrichtung mit einer darin integrierten Feststellbremsfunktion.

Ferner ist aus DE 10 2012 000 435 A1 der hiesigen Anmelderin ein Feststellbremsmodul für eine "europäische Anhängersteuerung" bekannt. Das dort offenbarte Modul nutzt ein Relaisventil sowie ein erstes und ein zweites bistabiles Ventil, um den entsprechenden Bremsdruck für die Betriebsbremsen des Anhängers auch im stromlosen Zustand bei entlüfteten Federspeichern aussteuern zu können.

Weiterhin ist aus DE 10 2004 051 309 B4 eine aus Modulen mit elektrischen und/oder pneumatischen Komponenten aufgebaute elektropneumatische Zentraleinheit des Nutzfahrzeugs offenbart. Die Zentraleinheit kann aus einzelnen Modulen zusammengesteckt werden, um entsprechende Funktionalitäten zu erreichen. Die einzelnen Module weisen elektrische und pneumatische Anschlüsse auf, die miteinander korrespondieren.

DE 10 2007 047 691 A1 offenbart einen Feststellbremsmodulator, mittels dessen Betriebsbremsen des Anhängers in Übereinstimmung mit Federspeichern des Zugwagens angesteuert werden können. Der Feststellbremsmodulator weist ein Zugwagenschutzventil auf, das so ausgebildet ist, dass bei einem Druckabfall des Vorratsdrucks für den Anhänger auch die Steuerdruckleitung gesperrt wird. Ein elektropneumatisches Steuermodul mit einer Feststellbremseinheit und einer Anhängersteuereinheit ist aus DE 10 2015 112 490 A1 bekannt.

Aufgabe der vorliegenden Erfindung ist es, bei einem integrierten Modul, das sowohl eine Feststellbremseinheit als auch eine Anhängersteuereinheit aufweist, eine wenigstens teilweise funktionale Entkopplung zu erreichen. Insbesondere bei elektropneumatischen Steuermodulen, die für sowohl die Anhängersteuereinheit als auch die Feststellbremseinheit, denselben Druckluftvorrat verwenden, sind die beiden Einheiten in einigen Funktionen abhängig voneinander. Um diese Abhängigkeit aufzulösen, ist eine wenigstens teilweise Entkopplung erforderlich.

Die vorliegende Erfindung löst die Aufgabe bei einem elektropneumatischen Steuermodul der eingangs genannten Art mit den Merkmalen des Anspruchs 1.

Der Erfindung liegt die Erkenntnis zugrunde, dass durch das Vorsehen wenigstens eines Rückschlagventils zwischen der Anhängersteuereinheit und der Feststellbremseinheit, in einer dieser beiden Einheiten der Druck eingesperrt werden kann, auch wenn der Druckluftvorrat, der beide Einheiten gemeinsam versorgt, ausfällt, abgeschaltet wird oder heruntergepumpt wird.

In einer ersten bevorzugten Ausführungsform ist vorgesehen, dass das Rückschlagventil stromabwärts der Anhängersteuereinheit in einer mit dem Vorratsanschluss verbundenen pneumatischen Vorratsdruckleitung angeordnet ist. In dieser Variante kann also der Vorratsdruck, der in der Feststellbremseinheit anliegt, eingesperrt werden, wenn der Vorratsdruck in der Anhängersteuereinheit abfällt.

In einer weiteren bevorzugten Ausgestaltung ist ein Parkbremsventil vorgesehen, das bei Verbinden des Federspeicheranschlusses mit dem Entlüftungsanschluss so geschaltet wird, dass ein Bremsdruck an dem Anhängerbremsdruckanschluss aussteuerbar ist. Das heißt, sobald der Federspeicheranschluss entlüftet wird, die Federspeicherbremsen also zuspannen, wird ein Bremsdruck an dem Anhängerbremsdruckanschluss ausgesteuert, um den Anhängerwagen einzubremsen. Über das Parkbremsventil findet in dieser Ausführungsform vorzugsweise eine funktionale Kopplung zwischen der Feststellbremseinheit und der Anhängersteuereinheit statt. Werden beispielsweise die Federspeicherbremsen zum Zusatzbremsen eingesetzt, wird automatisch über das Parkbremsventil veranlasst, dass ein Bremsdruck an dem Anhängerbremsdruckanschluss ausgesteuert wird. Ferner lässt sich über das Parkbremsventil in dieser Ausführungsform eine europäische Anhängersteuerung erreichen, sodass der Anhängerwagen bei abgestelltem Zugfahrzeug und mit eingelegten Federspeicherbremsen, ebenfalls eingebremst wird.

In einer solchen Variante ist vorzugsweise vorgesehen, dass das Rückschlagventil stromabwärts des Parkbremsventils in einer mit dem Vorratsanschluss verbundenen pneumatischen Vorratsdruckleitung angeordnet ist. Das Parkbremsventil und die Anhängersteuereinheit sind funktional gekoppelt und eine Entkopplung zwischen diesen beiden und der Feststellbremseinheit findet über das Rückschlagventil statt.

In einer Variante hierzu ist das Rückschlagventil stromaufwärts des Parkbremsventils in einer mit dem Vorratsanschluss verbundenen pneumatischen Vorratsdruckleitung angeordnet. In einer solchen Variante wäre typischerweise ein Herunterpumpen nicht möglich.

Unter einem Herunterpumpen versteht man in der Regel, dass durch Reduzieren des Drucks des Druckluftvorrats, der an den Vorratsanschluss angeschlossen ist, ein Zuspannen der Federspeicherbremsen erreicht werden kann. Ist aber das Rückschlagventil vollständig stromaufwärts der Feststellbremseinheit angeordnet, wird der entsprechende Vorratsdruck vollständig in der Feststellbremseinheit eingesperrt, und ein Herunterpumpen ist nicht möglich.

Erfindungsgemäß weist die Feststellbremseinheit eine Feststellbrems-Vorsteuereinheit und eine Feststellbrems-Hauptventileinheit auf, wobei die Feststellbrems-Vorsteuereinheit von der elektronischen Steuereinheit wenigstens ein Schaltsignal empfängt und in Antwort darauf einen Vorsteuerdruck an der Feststellbrems-Hauptventileinheit aussteuert, die in Folge einen Federspeicherbremsdruck an dem Federspeicheranschluss aussteuert. Die Feststellbrems-Vorsteuereinheit stellt den Vorsteuerdruck an der Feststellbrems-Hauptventileinheit bereit, der äquivalent zu dem Federspeicherbremsdruck ist, der an dem Federspeicheranschluss ausgesteuert wird. Hierzu kann die Feststellbrems-Hauptventileinheit insbesondere ein Relais-Ventil oder dergleichen aufweisen.

Erfindungsgemäß ist das Rückschlagventil stromabwärts der Feststellbrems-Vorsteuereinheit und stromaufwärts der Feststellbrems-Hauptventileinheit in einer mit dem Vorratsanschluss verbundenen pneumatischen Vorratsdruckleitung angeordnet. Hierdurch kann der Vorratsdruck dann in der Feststellbrems-Hauptventileinheit eingesperrt werden, wobei über die Feststellbrems-Vorsteuereinheit auch ein Herunterpumpen erlaubt werden kann bzw. bei einem elektrischen Ausfall ermöglicht wird. Die Feststellbrems-Vorsteuereinheit kann in dieser Ausführungsform funktional mit der Anhängersteuereinheit gekoppelt sein und von dieser abhängen. Die Feststellbrems-Hauptventileinheit ist unabhängig davon und insbesondere unabhängig von einem Vorratsdruck, der an der Anhängersteuereinheit anliegt.

In einer nicht erfindungsgemäßen Ausführung weist die Feststellbrems-Vorsteuereinheit ein Bistabilventil und ein 3/2-Wegeventil auf, wobei das Rückschlagventil stromabwärts des Bistabilventils und stromaufwärts des 3/2-Wegeventils angeordnet ist. In dieser Variante ist also das Rückschlagventil in die Feststellbrems-Vorsteuereinheit integriert. Ein von der Feststellbrems-Vorsteuereinheit ausgesteuerter Druck kann somit unabhängig von der Schaltstellung des Bistabilventils eingesperrt werden. Eine derart gebildete Variante ist insbesondere dann bevorzugt, wenn die Feststellbrems-Hauptventileinheit nicht ein einziges Relais-Ventil aufweist, sondern zwei pneumatisch schaltbare Hauptventile, von denen eines durch das Bistabilventil und das andere durch das 3/2-Wegeventil mit entsprechenden Steuerdrücken versorgt wird. Auch bei einer solchen Variante kann dann ein Herunterpumpen erlaubt werden, sodass sich die Federspeicherbremsen auch in einem Defektfall durch das Herunterpumpen einlegen lassen.

Gemäß einer bevorzugten Ausführungsform weist das elektropneumatische Steuermodul ein gemeinsames Gehäuse auf, welches nur einen Vorratsanschluss und einen Entlüftungsanschluss aufweist. Es sind also für das gesamte Steuermodul ein gemeinsamer Vorratsanschluss und ein gemeinsamer Entlüftungsanschluss vorgesehen. Hierdurch kann der Bauraum insgesamt reduziert werden, und auch die Integration des elektropneumatischen Steuermoduls in ein Bremssystem kann vereinfacht sein.

Weiterhin ist bevorzugt, dass das elektropneumatische Steuermodul einen Redundanzanschluss aufweist, über den ein Redundanzdruck an der Anhängersteuereinheit aussteuerbar ist zum redundanten Aussteuern des Bremsdrucks. An einen solchen Redundanzanschluss kann beispielsweise ein Bremswertgeber oder der Brems- oder Steuerdruck einer anderen Fahrzeugachse angeschlossen werden. Ein solcher Bremswertgeber kann rein pneumatisch, elektropneumatisch oder rein elektrisch ausgebildet sein. Der Redundanzanschluss dient dazu, eine Fahrzeugsollverzögerung eines Fahrzeugführers zu empfangen, die dieser mittels des Bremswertgebers manuell einsteuert. Der Fahrzeugführer kann so in einem Fehlerfall, zum Beispiel bei Ausfall der Versorgungsspannung, manuell einen Bremsdruck für den Anhänger aussteuern. Alternativ wird an dem Redundanzanschluss ein Brems- oder Steuerdruck einer anderen Fahrzeugachse, zum Beispiel Vorderachse, ausgesteuert. Hierdurch kann dann im Fehlerfall der Anhängerwagen in Übereinstimmung mit der anderen Fahrzeugachse eingebremst werden. Der Redundanzanschluss ist vorzugsweise mit dem Parkbremsventil verbunden, sodass bei gelösten Federspeicherbremsen, der Redundanzdruck durch das Parkbremsventil durchsteuerbar ist.

Ähnlich wie die Parkbremseinheit weist auch die Anhängersteuereinheit vorzugsweise eine Anhängervorsteuereinheit zum Aussteuern wenigstens eines Steuerdrucks und eine Anhänger-Hauptventileinheit zum Aussteuern des Bremsdrucks auf. Wiederum steuert die Anhängervorsteuereinheit den Steuerdruck aus, der dann als äquivalenter Bremsdruck von der Anhänger-Hauptventileinheit umgesetzt wird. Die Anhänger-Hauptventileinheit wirkt vorzugsweise pneumatisch, währen die Anhängervorsteuereinheit elektropneumatisch wirkt.

Bei einer solchen Variante ist bevorzugt, dass die Anhängervorsteuereinheit ein Redundanzventil aufweist, welches stromlos in einer offenen Schaltstellung ist, und wobei der Redundanzdruck über das Redundanzventil an der Anhänger-Hauptventileinheit bereitgestellt werden kann. Solange das elektropneumatische Steuermodul funktioniert, wird vorzugsweise das Redundanzventil so geschaltet, dass es geschlossen ist. Der Redundanzdruck kann ausgesperrt werden. Erst im Fehlerfall wird das Redundanzventil stromlos geschaltet und so geöffnet, dass der Redundanzdruck durchgesteuert werden kann. Dieser dient dann vorzugsweise als Steuerdruck für die Anhänger-Hauptventileinheit, die basierend auf dem empfangenen Redundanzdruck einen redundanten Bremsdruck in Übereinstimmung mit dem Redundanzdruck aussteuert. Hierbei kann vorgesehen sein, dass der Redundanzanschluss über eine erste Redundanzleitung mit dem Parkbremsventil verbunden ist.

Gemäß einer bevorzugten Ausgestaltung ist das Parkbremsventil als ein pneumatisch gesteuertes Schaltventil ausgebildet, welches einen pneumatischen Steuereingang zum Aufnehmen eines pneumatischen Steuerdrucks aufweist, wobei das pneumatisch gesteuerte Schaltventil bei Verbinden des Federspeicheranschlusses mit dem Entlüftungsanschluss so geschaltet wird, dass der Bremsdruck an dem Anhängerbremsdruckanschluss aussteuerbar ist. Durch Einsatz des pneumatisch gesteuerten Schaltventils wird einerseits ein einfacher Aufbau erreicht, der es ermöglicht, auf ein inverses Relais-Ventil zu verzichten, andererseits wird die Aussteuerung eines Bremsdrucks an dem Anhängerbremsdruckanschluss in dem Fall erreicht, wenn die Federspeicher entlüftet sind. Es ist mit dieser Lösung also möglich, einerseits auf das inverse Relais-Ventil zu verzichten, und andererseits eine sichere Anhängerbremsung gemäß der europäischen Anhängersteuerung zu erreichen. Hierzu ist auch kein weiteres elektropneumatisches Ventil erforderlich, wie dies im Stand der Technik teilweise genutzt wurde. Ein pneumatisch gesteuertes Schaltventil hat den Vorteil, dass es auch stromlos aufgrund des pneumatischen Drucks alleine geschaltet werden kann. Das pneumatisch gesteuerte Schaltventil gemäß dieser Ausführungsform weist eine erste und eine zweite Schaltstellung auf, wobei es in der ersten Schaltstellung so geschaltet ist, dass ein Bremsdruck im Anhängerbremsdruckanschluss ausgesteuert wird und in der zweiten Schaltstellung kein Bremsdruck an dem Anhängerbremsdruckanschluss ausgesteuert wird. In der ersten Schaltstellung wird vorzugsweise der Vorratsdruck durchgesteuert. Das Schaltventil ist vorzugsweise drucklos in der ersten Schaltstellung. In der zweiten Schaltstellung wird hingegen der Redundanzdruck durchgesteuert, um ein redundantes Abbremsen des Anhängers zuzulassen. Nur bei einem entsprechenden pneumatischen Druck am Steuereingang schaltet das Schaltventil in die zweite Schaltstellung. Solange die Federspeicher gelöst sind und die Zylinder der Federspeicherbremsen belüftet sind, ist das pneumatisch gesteuerte Schaltventil in der zweiten Schaltstellung und wenn der Federspeicheranschluss mit der Drucksenke verbunden ist, und die Federspeicher entlüftet sind, wird das pneumatisch gesteuerte Schaltventil aufgrund der Federbelastung in die erste Schaltstellung verbracht.

Gemäß einer weiteren bevorzugten Ausführungsform ist die elektronische Steuereinheit dazu eingerichtet, die Feststellbrems-Ventileinheit basierend auf einem elektronischen Feststellbrems-Feststellsignal zu veranlassen, wenigstens ein Ventil der Feststellbrems-Ventileinheit so zu schalten, dass der Federspeicheranschluss zum Entlüften des Federspeichers mit einer Drucksenke verbunden wird.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein erstes nicht erfindungsgemäßes Ausführungsbeispiel des elektropneumatischen Steuermoduls;
- Fig. 2: ein zweites nicht erfindungsgemäßes Ausführungsbeispiel des elektropneumatischen Steuermoduls;
- Fig. 3: ein drittes erfindungsgemäßes Ausführungsbeispiel des elektropneumatischen Steuermoduls;
- Fig. 4: ein viertes nicht erfindungsgemäßes Ausführungsbeispiel des elektropneumatischen Steuermoduls;
- Fig. 5: ein fünftes nicht erfindungsgemäßes Ausführungsbeispiel des elektropneumatischen Steuermoduls; und
- Fig. 6: eine schematische Darstellung eines Fahrzeugzugs mit dem elektropneumatischen Steuermodul.

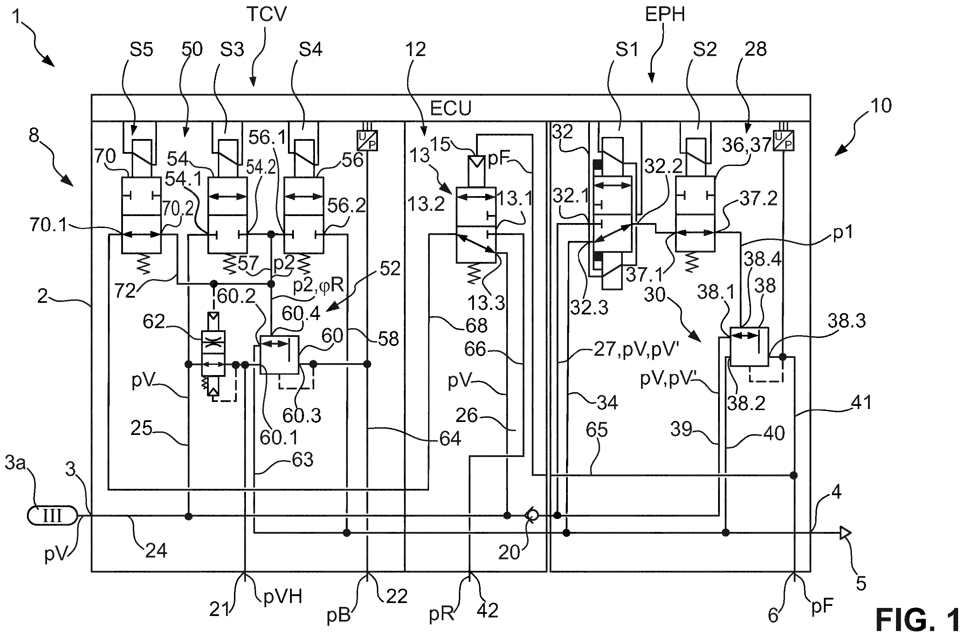

Fig. 1 zeigt ein erstes Ausführungsbeispiel des elektropneumatischen Steuermoduls 1 für ein elektronisch steuerbares pneumatisches Bremssystem für einen Fahrzeugzug mit einem Zugwagen und einem Anhängerwagen.

Das elektropneumatisches Steuermodul 1 weist eine Anhängersteuereinheit TCV und eine Feststellbremseinheit EPH auf. Beide sind in ein gemeinsames Gehäuse 2 integriert.

In den Figuren sind für das elektropneumatische Steuermodul 1 lediglich die pneumatischen Anschlüsse dargestellt, nämlich der Vorratsanschluss 3, der über die Vorratszufuhrleitung einem Druckluftvorrat 3a verbunden ist. Das elektropneumatische Steuermodul 1 weist in dieser Ausführungsform nur einen Vorratsanschluss 3 auf, der als gemeinsamer Vorratsanschluss fungiert. Der Druckluftvorrat stellt einen Vorratsdruck pV an dem Vorratsanschluss 3 bereit. Das elektropneumatische Steuermodul 1 weist ferner einen Entlüftungsanschluss 4 auf, der mit einer Entlüftung oder Drucksenke 5 verbunden ist. Auch der Entlüftungsanschluss 4 ist als gemeinsamer Entlüftungsanschluss 4 ausgebildet. Ferner weist das elektropneumatische Steuermodul 1 einen Federspeicheranschluss 6, an dem ein oder mehrere nicht dargestellte Federspeicher angeschlossen werden können sowie einen Anhängerversorgungsdruckanschluss 21 und einen Anhängerbremsdruckanschluss 22 auf.

Zum Steuern des Anhängerwagens ist das elektropneumatische Steuermodul 1 über einen Anhängerversorgungsdruckanschluss 21 mit dem Anschluss verbindbar, der auch als "roter Kupplungskopf" bezeichnet wird, und über einen Anhängerbremsdruckanschluss 22 mit einem weiteren Anschluss, der auch als "gelber Kupplungskopf" bezeichnet wird. An dem Anhängerversorgungsdruckanschluss 21 wird von der Anhängersteuereinheit TCV ein Anhängerversorgungsdruck pVH bereitgestellt.; an dem Anhängerbremsdruckanschluss 22 entsprechend ein Bremsdruck pB. Hierzu weist die Anhängersteuereinheit TCV eine Anhängersteuer-Ventileinheit 8 auf.

In übereinstimmender Weise steuert die Feststellbremseinheit EPH an dem Federspeicheranschluss 6 einen Federspeicherbremsdruck pF aus, um die an diesem angeschlossenen Federspeicher zu lösen. Hierzu weist die Feststellbremseinheit EPH eine Feststellbrems-Ventileinheit 10 auf.

Zwischen der Feststellbremseinheit EPH und der Anhängersteuereinheit TCV ist ein Parkbremsventil 12 angeordnet, welches in diesem Fall als pneumatisches Schaltventil 13 ausgebildet ist. Es weist einen pneumatischen Steuereingang 15 auf. Das Parkbremsventil 12 dient dazu, wie später noch beschrieben werden wird, an dem Anhängerbremsdruckanschluss 22 einen Bremsdruck pB auszusteuern, wenn der Federspeicheranschluss 6 entlüftet ist.

Gemäß Fig. 1 weist das elektropneumatische Steuermodul 1 eine von dem gemeinsamen Vorratsanschluss 3 ausgehende Vorratsverteilleitung 24 auf. Von der Vorratsverteilleitung 24 zweigt eine erste Vorratsdruckleitung 25 für die Anhängersteuereinheit TCV, bzw. die Anhängersteuer-Ventileinheit 8 ab. Weiterhin zweigt von der Vorratsverteilleitung 24 eine zweite Vorratsdruckleitung 26 für das Parkbremsventil 12 ab. Schließlich mündet die Vorratsverteilleitung 24 in die Feststellbremseinheit EPH und versorgt diese mit Vorratsdruck pV.

In dem ersten Ausführungsbeispiel (Fig. 1) ist ein Rückschlagventil 20 vorgesehen, welches in die Vorratsverteilleitung 24 eingesetzt ist, und zwar zwischen der Anhängersteuereinheit TCV und der Feststellbremseinheit EPH, genauer gesagt zwischen dem Parkbremsventil 12 und der Feststellbremseinheit EPH. Konkret ist das Rückschlagventil 20 stromabwärts der zweiten Vorratsdruckleitung 26 angeordnet, also stromabwärts vom Parkbremsventil 12, aber stromaufwärts der Feststellbremseinheit EPH. Die Wirkung des Rückschlagventils wird im Folgenden beschrieben werden.

Die Feststellbrems-Ventileinheit 10 weist eine Feststellbrems-Vorsteuereinheit 28 und eine Feststellbrems-Hauptventileinheit 30 auf. Die Feststellbrems-Vorsteuereinheit 28 dient dazu, von der elektronischen Steuereinheit ECU wenigstens ein erstes Schaltsignal S1 und vorzugsweise ein zweites Schaltsignal S2 zu empfangen, und in Antwort darauf einen ersten Vorsteuerdruck p1 an der Feststellbrems-Hauptventileinheit 30 auszusteuern. Die Feststellbrems-Hauptventileinheit 30 steuert in der Folge den Federspeicherbremsdruck pF aus. In der in Fig. 1 gezeigten Ausführungsform umfasst die Feststellbrems-Vorsteuereinheit 28 ein Bistabilventil 32. Ein solches Bistabilventil 32 kann aber auch durch eine Kombination von mehreren monostabilen Ventilen ersetzt werden.

Das Bistabilventil 32 hat zwei stabile Schaltzustände. Es weist einen ersten Bistabilventilanschluss 32.1, einen zweiten Bistabilventilanschluss 32.2 und einen dritten Bistabilventilanschluss 32.3 auf. In der ersten, in der Fig. 1 gezeigten Schaltstellung, ist der dritte Bistabilventilanschluss 32.3 mit dem zweiten Bistabilventilanschluss 32.2 verbunden. In der zweiten, in Figur 1 nicht gezeigten Schaltstellung, ist der erste Bistabilventilanschluss 32.1 mit dem zweiten Bistabilventilanschluss 32.2 verbunden. Der erste Bistabilventilanschluss 32.1 ist über eine dritte Vorratsdruckleitung 27 mit der Vorratsverteilleitung 24 verbunden, sodass an dem ersten Bistabilventilanschluss 32.1 der Vorratsdruck pV anliegt. Der dritte Bistabilventilanschluss 32.3 ist über eine erste Entlüftungsleitung 34 mit dem Entlüftungsanschluss 4 verbunden. Der zweite Bistabilventilanschluss 32.2 ist mit einem Steuerventil 36 verbunden, welches in diesem Ausführungsbeispiel als 2/2-Wege-Steuerventil 37 ausgebildet ist. Es weist einen ersten 2/2-Wege-Steuerventilanschluss 37.1 und einen zweiten 2/2-Wege-Steuerventilanschluss 37.2 auf. Das Steuerventil 36 ist so ausgelegt, dass es in der stromlosen ersten Schaltstellung, die in Fig. 1 gezeigt ist, offen ist, und in einer zweiten, bestromten Stellung, geschlossen ist. Das Steuerventil 36 wird aufgrund eines zweiten Schaltsignals S2 von der elektronischen Steuereinheit ECU geschaltet.

Über das Bistabilventil 32 und das Steuerventil 36 wird der erste Vorsteuerdruck p1 an der Feststellbrems-Hauptventileinheit 30 ausgesteuert. Die Feststellbrems-Hauptventileinheit 30 besteht in diesem Ausführungsbeispiel aus einem ersten Relais-Ventil 38. Das erste Relais-Ventil 38 weist einen EPH-Relais-Ventil-Vorratsanschluss 38.1, ein EPH-Relais-Ventil-Entlüftungsanschluss 38.2, einen EPH-Relais-Ventil-Arbeitsanschluss 38.3 und einen EPH-Relais-Ventil-Steueranschluss 38.4 auf. An dem EPH-Relais-Ventil-Steueranschluss 38.4 wird der erste Vorsteuerdruck p1 ausgesteuert. Der EPH-Relais-Ventil-Vorratsanschluss 38.1 ist über eine vierte Vorratsdruckleitung 39 mit der Vorratsverteilleitung 24 verbunden und empfängt den Vorratsdruck pV. Der EPH-Relais-Ventil-Entlüftungsanschluss 38.2 ist über eine zweite Entlüftungsleitung 40 mit dem Entlüftungsanschluss 4 verbunden. Der EPH-Relais-Ventil-Arbeitsanschluss 38.3 ist über eine Federspeicherbremsdruckleitung 41 mit dem Federspeicheranschluss 6 verbunden und steuert den Federspeicherbremsdruck pF aus.

Fällt nun der Vorratsdruck pV an dem Vorratsanschluss 3 ab, wirkt das Rückschlagventil 20 als Sperre und verhindert, dass Vorratsdruck pV in der Feststellbremseinheit EPH abfallen kann. Der stromabwärts des Rückschlagventils 20 vorhandene Vorratsdruck pV wird als eingesperrter Vorratsdruck pV' eingesperrt, sodass insbesondere solange das Bistabilventil 32 in der zweiten in Fig. 1 nicht gezeigten Schaltstellung ist, der erste Steuerdruck p1 weiterhin ausgesteuert bleiben kann, und auch an dem EPH-Relais-Ventil-Arbeitsanschluss 38.1 der eingesperrte Vorratsdruck pV' ausgesteuert bleibt. In der Folge kann auch bei Abfallen des Vorratsdruck pV an dem Vorratsanschluss 3 der Federspeicherbremsdruck pF ausgesteuert bleiben, sodass Federspeicherbremsen, die an einen Federspeicheranschluss 6 angeschlossen sind, entlüftet bleiben können. Über das Bistabilventil 32, das auch in die erste in Fig. 1 gezeigte Schaltstellung geschaltet werden kann, kann der EPH-Relais-Ventil-Steueranschluss 38.4 entlüftet werden, sodass in der Folge der Federspeicheranschluss 6 entlüftet und die daran angeschlossenen Federspeicherbremsen zugespannt werden können. Das heißt, das Rückschlagventil 20 führt dazu, dass eine teilweise Entkopplung zwischen der Feststellbremseinheit EPH und der Anhängersteuereinheit TCV vorliegt.

Die stromaufwärts des Rückschlagventils 20 angeordnete Anhängersteuereinheit TCV, genauer gesagt die Anhängersteuer-Ventileinheit 8, weist eine Anhänger-Vorsteuereinheit 50 und eine Anhänger-Hauptventileinheit 52 auf. Die Anhänger-Vorsteuereinheit 50 steuert einen zweiten Vorsteuerdruck p2 an der Anhänger-Hauptventileinheit 52 aus, die dann in Folge den Bremsdruck pB an dem Anhängerbremsdruckanschluss 22 aussteuert. Genauer gesagt, weist die Anhänger-Vorsteuereinheit 50 ein Einlassventil 54 auf und ein Auslassventil 56 auf, die jeweils als monostabile 2/2-Wege-Ventile ausgebildet sind. Das Einlassventil 54 wird aufgrund eines dritten Schaltsignals S3 von der elektronischen Steuereinheit ECU und das Auslassventil 56 aufgrund eines vierten Schaltsignals S4 von der elektronischen Steuereinheit ECU geschaltet. Das Einlassventil 54 weist einen ersten Einlassventilanschluss 54.1 und einen zweiten Einlassventilanschluss 54.2 auf. Der erste Einlassventilanschluss 54.1 ist mit der ersten Vorratsdruckleitung 25 verbunden und der empfängt den Vorratsdruck pV. Der zweite Einlassventilanschluss 54.2 ist mit einer zweiten Vorsteuerleitung 57 verbunden und steuert in diese den zweiten Vorsteuerdruck p2 aus. Zum Entlüften der Anhänger-Hauptventileinheit 52 ist das Auslassventil 56 vorgesehen. Dieses weist einen ersten Auslassventilanschluss 56.1 und einen zweiten Auslassventilanschluss 56.2 auf. Der erste Auslassventilanschluss 56.1 ist mit der zweiten Vorsteuerleitung 57 verbunden, und der zweite Auslassventilanschluss 56.2 ist über eine dritte Entlüftungsleitung 58 mit dem Entlüftungsanschluss 4 verbunden.

Die Anhänger-Hauptventileinheit 52 weist in diesem Ausführungsbeispiel ein zweites Relais-Ventil 60 auf, das einen TCV-Relais-Ventil-Vorratsanschluss 60.1, einen TCV-Relais-Ventil-Entlüftungsanschluss 60.2, einen TCV-Relais-Ventil-Arbeitsanschluss 60.3 und einen TCV-Relais-Ventil-Steueranschluss 60.4 aufweist. Die Anhänger-Vorsteuereinheit 50 steuert den zweiten Vorsteuerdruck p2 an dem TCV-Relais-Ventil-Steueranschluss 60.4 aus. Der TCV-Relais-Ventil-Vorratsanschluss 60.1 ist über ein Anhängerabrissventil 62 mit der ersten Vorratsdruckleitung 25 verbunden und empfängt den Vorratsdruck pV. Der TCV-Relais-Ventil-Entlüftungsanschluss 60.2 ist über eine vierte Entlüftungsleitung 63 mit dem Entlüftungsanschluss 4 verbunden. Der TCV-Relais-Ventil-Arbeitsanschluss 60.3 ist über eine Bremsdruckleitung 64 mit dem Anhängerbremsdruckanschluss 22 verbunden, und steuert an diesem den Bremsdruck pB aus.

Wie sich hieraus ergibt, sind sowohl die Anhänger-Vorsteuereinheit 50 als auch die Anhänger-Hauptventileinheit 52 stromaufwärts des Rückschlagventils 20 angeordnet, sodass diese nicht von der Feststellbremseinheit EPH beeinflusst werden.

Wie bereits eingangs erwähnt, ist zwischen der Anhängersteuereinheit TCV und der Parkbremseinheit EPH das Parkbremsventil 12 angeordnet. Das Parkbremsventil 12 ist als Schaltventil 13 ausgebildet und weist einen ersten Schaltventilanschluss 13.1, einen zweiten Schaltventilanschluss 13.2 und einen dritten Schaltventilanschluss 13.3 auf. Über eine dritte Vorsteuerleitung 65 ist der pneumatische Steuereingang 15 des Parkbremsventils 12 mit der Parkbremsdruckleitung 41 verbunden und empfängt den Federspeicherbremsdruck pF. Das Schaltventil 13 ist federbelastet in die erste in Fig. 1 gezeigte Schaltstellung vorgespannt, in der der zweite Schaltventilanschluss 13.2 mit dem dritten Schaltventilanschluss 13.3 verbunden ist. Sobald der Federspeicherbremsdruck pF einen bestimmten Schwellwert überschreitet, schaltet das Schaltventil 13 in die zweite in Fig. 1 nicht gezeigte Schaltstellung, in der der erste Schaltventilanschluss 13.1 mit dem zweiten Schaltventilanschluss 13.2 verbunden ist. Während der dritte Schaltventilanschluss 13.3 mit der zweiten Vorratsdruckleitung 26 verbunden ist, und den Vorratsdruck pV empfängt, ist der erste Schaltventilanschluss 13.1 mit einer ersten Redundanzdruckleitung 66 verbunden, die zu einem Redundanzanschluss 42 des elektropneumatischen Steuermoduls 1 führt. Das heißt, solange durch die Parkbremseinheit EPH ein Federspeicherbremsdruck pF an dem Federspeicheranschluss 6 ausgesteuert wird, ist der erste Schaltventilanschluss 13.1 mit dem zweiten Schaltventilanschluss 13.2 verbunden, sodass an dem zweiten Schaltventilanschluss 13.2 der Redundanzdruck pR aussteuerbar ist.

Der Redundanzdruck pR wird beispielsweise von einem manuell betätigbaren und vorzugsweise pneumatisch wirkenden Bremswertgeber, wie etwa einem Bremspedal, bereitgestellt. Alternativ kann als Redundanzdruck pR auch der Druck einer weiteren Achse, beispielsweise einer Vorderachse, an dem Redundanzanschluss 42 ausgesteuert werden.

Wenn der Federspeicherbremsdruck pF unter einen bestimmten Schwellwert sinkt, weil beispielsweise die Federspeicher eingelegt werden sollen, schaltet das Schaltventil 13 in die in Fig.1 gezeigte Schaltstellung, sodass der Vorratsdruck pV an dem zweiten Schaltventilanschluss 13.2 ausgesteuert wird.

Der zweite Schaltventilanschluss 13.2 ist mit einer zweiten Redundanzdruckleitung 68 verbunden, die zu einem Redundanzventil 70 der Anhängersteuereinheit TCV führt. Das Redundanzventil 70 ist in Fig. 1 wiederum als 2/2-WegeVentil ausgebildet und weist einen ersten Redundanzventilanschluss 70.1 und einen zweiten Redundanzventilanschluss 70.2 auf. Der erste Redundanzventilanschluss 70.1 ist mit der zweiten Redundanzdruckleitung 68 verbunden, und der zweite Redundanzventilanschluss 70.2 ist mit einer dritten Redundanzdruckleitung 72 verbunden, die in die zweite Vorsteuerleitung 57 mündet. Auf diese Weise kann der Redundanzdruck pR an dem TCV-Relais-Ventil-Steueranschluss 60.4 ausgesteuert werden. Das Redundanzventil 70 ist so geschaltet, dass es stromlos offen ist. Bei Empfang eines fünften Schaltsignals S5 wird das Redundanzventil 70 in die geschlossene, in Fig. 1 nicht gezeigte, Schaltstellung verbracht. Sollte bei der elektronischen Steuereinheit ECU ein Defekt vorliegen, und gleichzeitig die Federspeicherbremsen des Zugfahrzeugs gelöst sein, also ein Federspeicherbremsdruck pF ausgesteuert sein, befindet sich das Schaltventil 13 in der zweiten in Fig. 1 nicht gezeigten Schaltstellung, sodass der Redundanzdruck pR durchgesteuert wird. In einer stromlosen Stellung sind sowohl das Einlassventil 54 als auch das Auslassventil 56 geschlossen, und das Redundanzventil 70 ist offen, sodass der Redundanzdruck pR von dem Redundanzanschluss 42 bis zum TCV-Relais-Ventil-Steueranschluss 60.4 durchgesteuert wird. In der Folge kann ein Bremsdruck pB redundant an dem Anhängerbremsdruckanschluss 22 ausgesteuert werden.

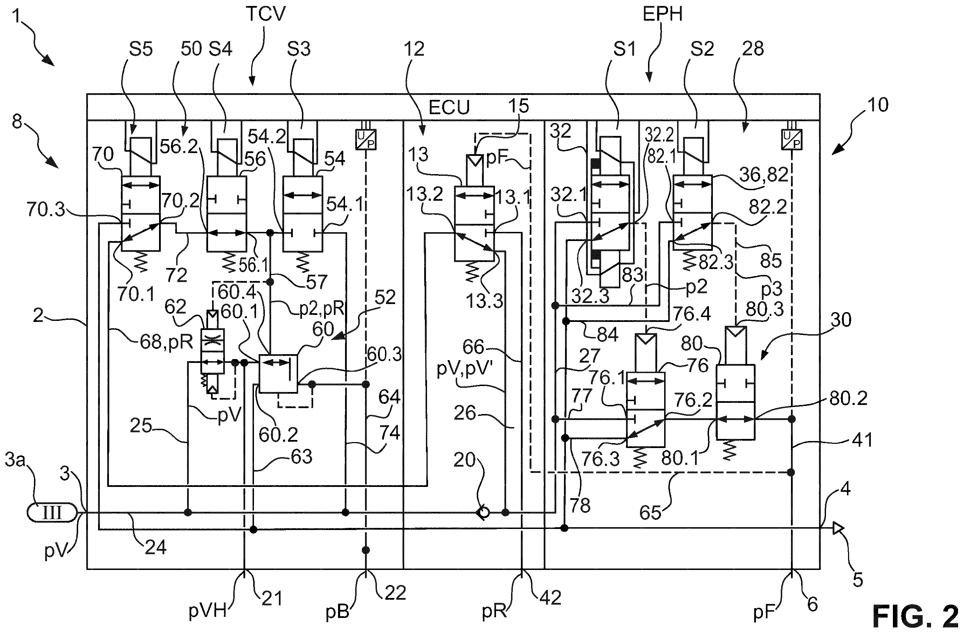

Die Figuren 2 bis 5 zeigen nun weitere Varianten und Ausführungsbeispiele, die im Folgenden beschrieben werden. Dabei werden insbesondere die Unterschiede betont. Gleiche und ähnliche Elemente sind mit den gleichen Bezugszeichen wie im ersten Ausführungsbeispiel bezeichnet und insofern wird vollumfänglich auf die obige Beschreibung zum ersten Ausführungsbeispiel (Fig. 1) verwiesen.

Ein erster Unterschied im zweiten Ausführungsbeispiel (vgl. Fig. 2) liegt darin, dass das Rückschlagventil 20 nicht zwischen dem Parkbremsventil 12 und der Feststellbremseinheit EPH angeordnet ist, sondern zwischen der Anhängersteuereinheit TCV und dem Parkbremsventil 12. Das Rückschlagventil 20 ist also sowohl stromaufwärts der Feststellbremseinheit EPH als auch stromaufwärts des Parkbremsventils 12 angeordnet. Auf diese Weise lässt sich auch der Vorratsdruck pV, der an dem Parkbremsventil 12 in der geparkten Position (Federspeicheranschluss 6 ist entlüftet) ausgesteuert werden kann, einsperren. Auch bei einem Absinken des Vorratsdrucks pV am Vorratsanschluss 3 können also in dieser Ausführungsform die Betriebsbremsen des Anhängers über das Parkbremsventil 12 eingelegt bleiben, da der Vorratsdrucks pV als eingesperrter Vorratsdrucks pV' über das Rückschlagventil 20 über das Parkbremsventil 12 eingesperrt bleibt.

Allerdings erlauben weder das erste Ausführungsbeispiel (Fig. 1) noch das zweite Ausführungsbeispiel (Fig. 2) ein Herunterpumpen und dadurch Einlegen der Feststellbremsen des Zugfahrzeugs. Bei einem Herunterpumpen wird der Druckluftvorrat 3a geleert, um so letztlich eine manuelle Entlüftung des Federspeicheranschlusses 6 zu erreichen und die Federspeicherbremsen des Zugfahrzeugs einzulegen. Dies kann dann erforderlich sein, wenn das Bremssystem einen so schwerwiegenden Fehler hat, dass die Federspeicherbremsen des Zugfahrzeugs nicht mehr eingelegt werden können. Da allerdings das Rückschlagventil 20 sowohl im ersten Ausführungsbeispiel als auch im zweiten Ausführungsbeispiel vollständig stromaufwärts der Parkbremseinheit EPH angeordnet ist, wird der darin vorhandene Druck jeweils vollständig eingesperrt, sodass auch ein Herunterpumpen des Druckluftvorrats 3a nicht zu einer Entlüftung des Federspeicheranschlusses 6 führt.

Weiterhin unterscheidet sich das zweite Ausführungsbeispiel (Fig. 2) vom ersten Ausführungsbeispiel (Fig. 1) in der Gestaltung der Anhängervorsteuereinheit 50 und auch in der Gestaltung der Feststellbrems-Ventileinheit 10.

Im Unterschied zum ersten Ausführungsbeispiel (Fig. 1) wird beim zweiten Ausführungsbeispiel (Fig. 2) der Redundanzdruck pR nicht über die dritte Redundanzdruckleitung 72 in die zweite Vorsteuerleitung 57 unter Umgehung des Einlassventils 44 und des Auslassventils 56 eingespeist, sondern der Redundanzdruck pR wird über die dritte Redundanzdruckleitung 72 über das Auslassventil 56 in die zweite Vorsteuerleitung 57 eingesteuert. Dies hat zum Vorteil, dass ein Übersteuern nicht möglich ist. Zu diesem Zweck wird die dritte Redundanzdruckleitung 72 an den zweiten Auslassventilanschluss 56.2 angeschlossen und das Auslassventil 56 so geschaltet, dass es stromlos offen ist. Das Redundanzventil 70 muss dann in der Folge als 3/2-Wege-Ventil ausgebildet sein und einen dritten Redundanzventilanschluss 70.3 aufweisen, der dann seinerseits mit der Entlüftung 4 verbunden ist, um eine Entlüftung des TCV-Relais-Ventil-Steueranschlusses 60.4 auch im Betriebsfall, wenn das Redundanzventil 70 bestromt ist, zu gewährleisten. Das Einlassventil 54 wird in der in Fig. 2 gezeigten Ausführungsform über eine separate fünfte Vorratsdruckleitung 74 versorgt, die von der Vorratsverteilleitung 24 abzweigt.

Der Unterschied in der Feststellbrems-Ventileinheit 10 ist wie folgt ausgebildet. In Übereinstimmung mit dem ersten Ausführungsbeispiel (Fig. 1) weist die Feststellbrems-Ventileinheit 10, genauer gesagt die Feststellbrems-Vorsteuereinheit 28 wiederum ein Bistabilventil 32 auf. Das Bistabilventil 32 steuert den ersten Vorsteuerdruck p1 aber nicht an dem Steuerventil 36 aus, sondern an einem ersten Hauptventil 76. Das erste Hauptventil 76 ist als pneumatisch schaltbares 3/2-Wege-Ventil ausgebildet und weist einen ersten Hauptventilanschluss 76.1, einen zweiten Hauptventilanschluss 76.2 und einen dritten Hauptventilanschluss 76.3 auf. Ferner weist es einen Hauptventilsteueranschluss 76.4 auf. Der erste Hauptventilanschluss 76.1 ist mit einer sechsten Vorratsdruckleitung 77 verbunden, die von der Vorratsverteilleitung 24 abzweigt. Die Abzweigung ist stromabwärts des Rückschlagventils 20 vorgesehen. Der dritte Hauptventilanschluss 76.3 ist mit einer fünften Entlüftungsleitung 78 verbunden, die mit dem Entlüftungsanschluss 24 verbunden ist. Der zweite Hauptventilanschluss 76.2 ist mit einem zweiten Hauptventil 80 verbunden, das als Sperrventil 80 ausgebildet ist. Das Sperrventil 80 weist einen ersten Sperrventilanschluss 80.1 und einen zweiten Sperrventilanschluss 80.2 auf und ist als 2/2-Wege-Ventil ausgebildet. Der zweite Hauptventilanschluss 76.2 ist mit dem ersten Sperrventilanschluss 80.1 verbunden, und der zweite Sperrventilanschluss 80.2 ist mit der Parkbremsdruckleitung 41 verbunden.

Auch das Sperrventil 80 ist als pneumatisch schaltbares Ventil ausgebildet und weist einen Sperrventilsteueranschluss 80.3 auf. Der Sperrventilsteueranschluss 80.3 ist mit dem Steuerventil 36 verbunden und empfängt von diesem einen dritten Vorsteuerdruck p3. Um den dritten Vorsteuerdruck p3 unabhängig vom Bistabilventil 32 aussteuern zu können, ist das Steuerventil als 3/2-Wege-Steuerventil 82 ausgebildet und weist einen ersten 3/2-Wege-Steuerventilanschluss 82.1, einen zweiten 3/2-Wege-Steuerventilanschluss 82.2 und einen dritten 3/2-Wege-Steuerventilanschluss 82.3 auf. Der erste 3/2-Wege-Steuerventilanschluss 82.1 ist über eine siebte Vorratsdruckleitung 83 mit der Vorratsverteilleitung 24 verbunden, wobei die siebte Vorratsdruckleitung 83 stromabwärts des Rückschlagventils 20 von der Vorratsverteilleitung 24 abzweigt. Der dritte 3/2-Wege-Steuerventilanschluss 82.3 ist über eine sechste Entlüftungsleitung 84 mit dem Entlüftungsanschluss 4 verbunden. Der zweite 3/2-Wege-Steuerventilanschluss 82.2 ist mit einer vierten Vorsteuerleitung 85 verbunden, die ihrerseits mit dem Sperrventilsteueranschluss 80.3 verbunden ist, um den dritten Vorsteuerdruck p3 an den dritten Sperrventilsteueranschluss 80.3 auszusteuern. Das Sperrventil 80 ist drucklos offen und in die offene, in Fig. 2 gezeigte erste Schaltstellung vorgespannt. Sobald der dritte Vorsteuerdruck p3 einen bestimmten Schwellwert überschreitet, schaltet das Sperrventil 80 in die zweite in Fig. 2 nicht gezeigte Schaltstellung, in der der erste und zweite Sperrventilanschluss 80.1, 80.2 getrennt sind. Die Kombination aus dem 3/2-Wege-Steuerventilanschluss 82 und dem Sperrventil 80 wird insbesondere zum gestuften Entlüften des Federspeicheranschlusses 6 verwendet, wenn die an diesen angeschlossenen Federspeicherbremsen zum Hilfsbremsen verwendet werden sollen.

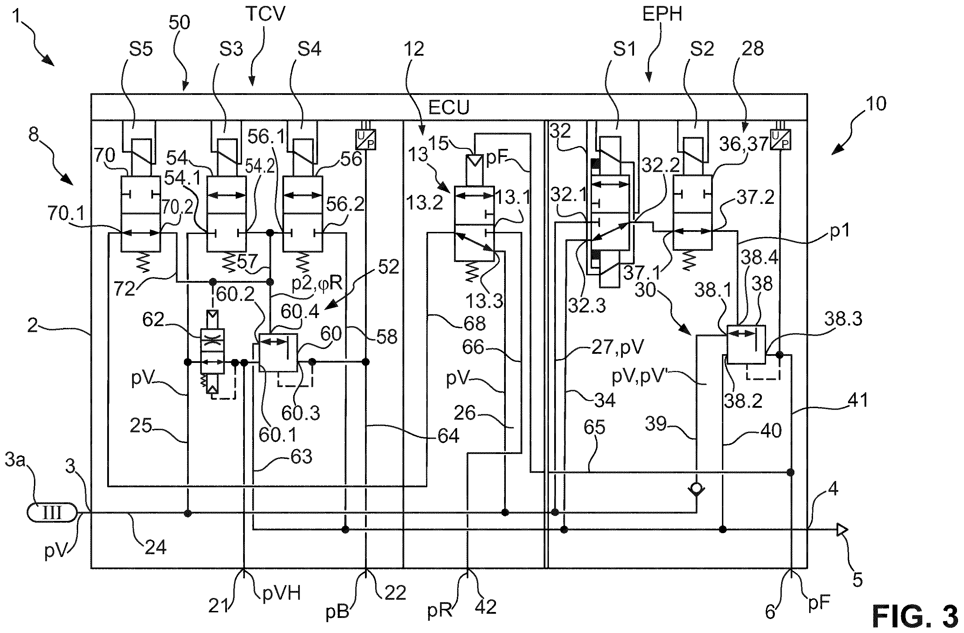

Die in den Figuren 3 bis 5 gezeigten Ausführungsbeispiele zeigen nun sämtlich elektropneumatische Steuermodule 1, die auch ein Herunterpumpen erlauben.

Zunächst ist in Fig. 3 ein Layout gezeigt, das im Wesentlichen mit dem Layout gemäß dem ersten Ausführungsbeispiel (Fig. 1) übereinstimmt. Wiederum sind gleiche Elemente mit denselben Bezugszeichen wie in Fig. 1 bezeichnet und es wird vollumfänglich auf die obige Beschreibung Bezug genommen. Der maßgebliche Unterschied zwischen dem ersten Ausführungsbeispiel (Fig. 1) und dem dritten Ausführungsbeispiel (Fig. 3) liegt in der Positionierung des Rückschlagventils 20. Genauer gesagt ist das Rückschlagventil 20 nicht, wie im ersten Ausführungsbeispiel, in die Vorratsverteilleitung 24 eingesetzt, sondern in die vierte Vorratsdruckleitung 39. Das Rückschlagventil 20 ist damit stromabwärts der Feststellbrems-Vorsteuereinheit 28 und stromaufwärts der Feststellbrems-Hauptventileinheit 30 angeordnet. Das heißt, wenn der Vorratsdruck pV an dem Vorratsanschluss 3 abnimmt, nimmt auch der am ersten Bistabilventilanschluss 32.1 anliegende Vorratsdruck pV ab. Während im ersten Ausführungsbeispiel (Fig. 1) an diesem Anschluss noch der eingeschlossene Vorratsdruck pV' anlag, kann der erste Bistabilventilanschluss 32.1 in dem dritten Ausführungsbeispiel auch durch Herunterpumpen des Vorratsanschlusses 3 entlüftet werden. Allein der Vorratsdruck pV in der vierten Vorratsdruckleitung, das heißt der Vorratsdruck, der am EPH-Relais-Ventil-Vorratsanschluss 38.1 anliegt, kann eingesperrt werden, sodass an diesem Anschluss der eingesperrte Vorratsdruck pV' anliegt. Auf diese Weise kann verhindert werden, dass bei einem Abfall des Drucks am Vorratsanschluss 3 direkt der Druck am EPH-Relais-Ventil-Vorratsanschluss 38.1 absinkt und damit die Federspeicherbremsen eingelegt werden würden. Ein Herunterpumpen des Federspeicheranschlusses 6 kann in diesem Ausführungsbeispiel auch dann verhindert werden, wenn das Steuerventil 36 in die zweite, in Fig. 3 nicht gezeigte, Schaltstellung geschaltet wird. Auf diese Weise lässt sich auch der erste Vorsteuerdruck p1 einsperren und die Federspeicherbremsen können dauerhaft gelöst bleiben, das heißt ein Federspeicherbremsdruck pF kann dauerhaft am Federspeicheranschluss 6 ausgesteuert bleiben, auch wenn der Druckluftvorrat 3a heruntergepumpt wird.

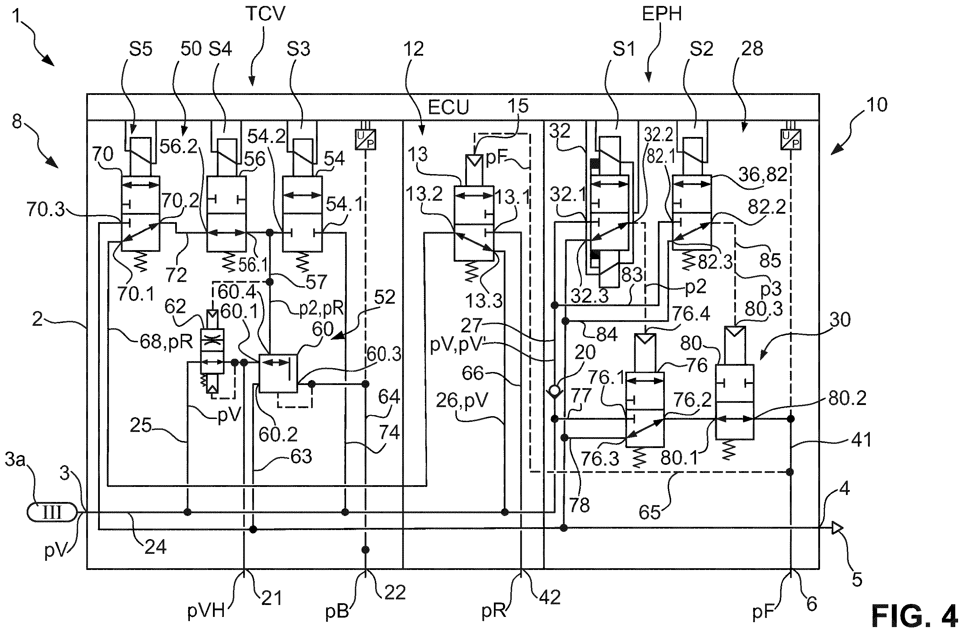

Das vierte Ausführungsbeispiel (Fig. 4) entspricht in seinem Layout wiederum dem zweiten Ausführungsbeispiel (Fig. 2). Gleiche und ähnliche Elemente sind wiederum mit gleichen Bezugszeichen versehen, sodass vollumfänglich auf die obige Beschreibung zum zweiten Ausführungsbeispiel Bezug genommen wird.

Der wesentliche Unterschied in dem vierten Ausführungsbeispiel mit Bezug auf das zweite Ausführungsbeispiel liegt wiederum darin, dass das Rückschlagventil 20 anders positioniert ist. Konkret ist das Rückschlagventil 20 in dem vierten Ausführungsbeispiel (Fig. 4) stromabwärts der Feststellbrems-Hauptventileinheit 30 und stromaufwärts der Feststellbrems-Vorsteuereinheit 28 angeordnet. Aus diesem Grund ist das Rückschlagventil 20 hier in die dritte Vorratsdruckleitung 27 eingesetzt, und zwar stromabwärts der Stelle, an der die sechste Vorratsdruckleitung 77 zum ersten Hauptventil 76 abzweigt. Der Vorratsdruck pV, der am ersten Bistabilventilanschluss 32.1 anliegt, kann als eingesperrter Vorratsdruck pV' eingesperrt werden. Das Gleiche gilt auch für den am ersten 3/2-Wege-Steuerventilanschluss 82.1 anliegenden Vorratsdruck, da die siebte Vorratsdruckleitung 83 stromabwärts des Rückschlagventils 20 von der dritten Vorratsdruckleitung 27 abzweigt. Auf diese Weise lässt sich sowohl der zweite Vorsteuerdruck p2 als auch der dritte Vorsteuerdruck p3 einsperren und auf diese Weise die Schaltstellung der Feststellbrems-Hauptventileinheit 30, das heißt des ersten Hauptventils 76 und des zweiten Hauptventils 80 (Sperrventil) aufrechterhalten.

Da aber die sechste Vorratsdruckleitung 77 stromaufwärts des Rückschlagventils 20 von der Vorratsverteilleitung 24 abzweigt, kann der am ersten Hauptventilanschluss 76.1 anliegende Vorratsdruck heruntergepumpt werden, wodurch auf diese Weise der Federspeicheranschluss 6 entlüftet werden kann.

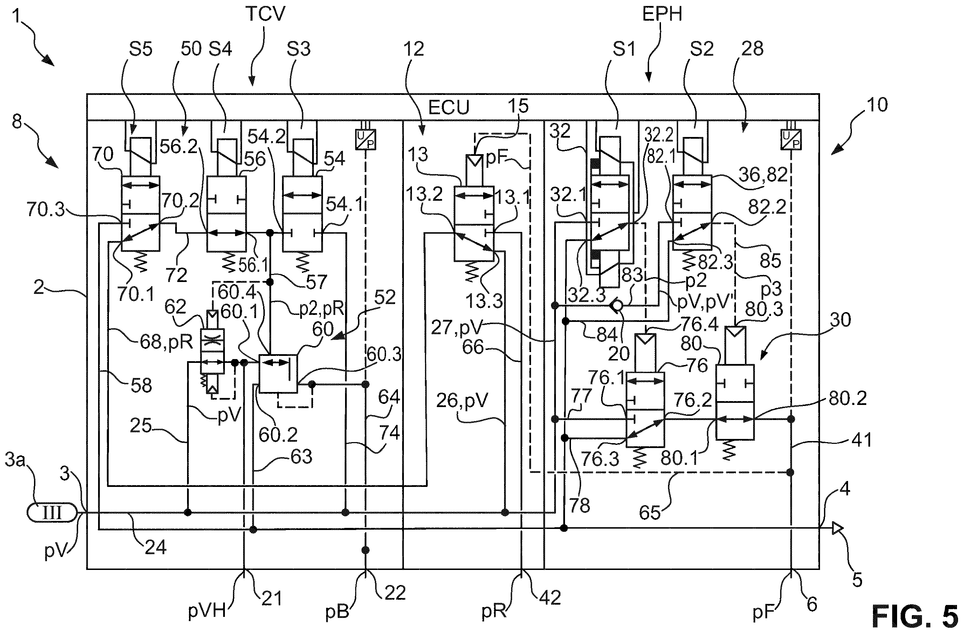

Das fünfte Ausführungsbeispiel (Fig. 5) basiert auf dem vierten Ausführungsbeispiel (Fig. 4). Der wesentliche Unterschied liegt darin, dass das Rückschlagventil 20 nun in die siebte Vorratsdruckleitung 83 eingesetzt ist, hierdurch ist das Rückschlagventil 20 in die Feststellbrems-Vorsteuereinheit 28 integriert. Das Rückschlagventil 20 ist in dieser Ausführungsform stromabwärts des Bistabilventils 32 und stromaufwärts des Steuerventils 36 angeordnet. Das heißt, in diesem Ausführungsbeispiel (Fig. 5) kann der dritte Vorsteuerdruck p3 eingesperrt werden, auch wenn der Vorratsanschluss 3 heruntergepumpt wird.

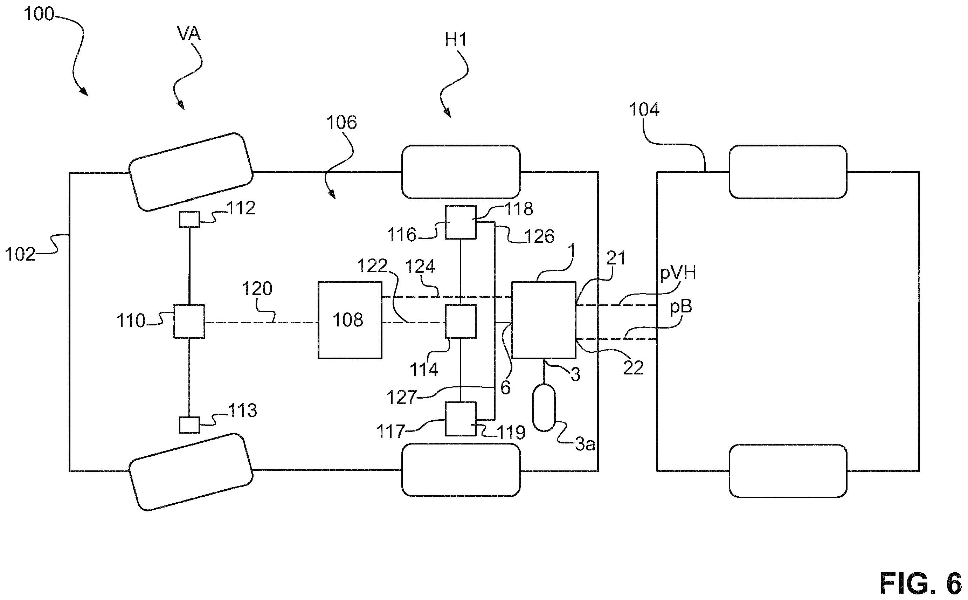

Figur 6 zeigt eine schematische Übersicht über einen Fahrzeugzug 100 mit einem Zugwagen 102 und einem Anhänger 104. Der Zugwagen 102 weist ein nur schematisch und nicht vollständig dargestelltes Bremssystem 106 auf. Das Bremssystem 106 umfasst ein Zentralmodul 108, einen Vorderachsmodulator 110 für Betriebsbremsen 112, 113 an einer Vorderachse VA, und einen Hinterachsmodulator 114 für kombinierte Bremszylinder 116, 117 an einer Hinterachse HA auf. Die kombinierten Bremszylinder 116, 117 weisen je eine Federspeicherbremse 118, 119 auf.

Das Zentralmodul 108 ist über erste und zweite elektrische Leitungen 120, 122mit dem Vorderachsmodulator 110 und dem Hinterachsmodulator 114 verbunden. Ferner ist es über eine dritte elektrische Leitung 124 mit dem elektropneumatischen Steuermodul 1 verbunden. Der Federspeicheranschluss 6 des elektropneumatischen Steuermoduls 1 ist über erste und zweite Federspeicherbremsdruckleitungen 126, 127 mit den Federspeicherbremsen 118, 119 der Hinterachse HA verbunden. Ferner versorgt der elektropneumatische Steuermodul 1 über den Anhängerbremsdruckanschluss 22 und den Anhängerversorgungsdruckanschluss 21 den Anhänger 104 mit den entsprechenden Drücken pVH, pB.

### Bezugszeichenliste (Bestandteil der Beschreibung)

- 1: Elektropneumatisches Steuermodul
- 2: Gehäuse
- 3: Vorratsanschluss
- 3a: Druckluftvorrat
- 4: Entlüftungsanschluss
- 5: Entlüftung
- 6: Federspeicheranschluss
- 8: Anhängersteuer-Ventileinheit
- 10: Feststellbrems-Ventileinheit
- 12: Parkbremsventil
- 13: pneumatisches Schaltventil
- 13.1: erster Schaltventilanschluss
- 13.2: zweiter Schaltventilanschluss
- 13.3: dritter Schaltventilanschluss
- 15: pneumatischen Steuereingang des Parkbremsventils
- 20: Rückschlagventil
- 21: Anhängerversorgungsdruckanschluss
- 22: Anhängerbremsdruckanschluss
- 24: Vorratsverteilleitung
- 25: erste Vorratsdruckleitung
- 26: zweite Vorratsdruckleitung
- 27: dritte Vorratsdruckleitung
- 28: Feststellbrems-Vorsteuereinheit
- 30: Feststellbrems-Hauptventileinheit
- 32: Bistabilventil
- 32.1: erster Bistabilventilanschluss
- 32.2: zweiter Bistabilventilanschluss
- 32.3: dritter Bistabilventilanschluss
- 34: erste Entlüftungsleitung
- 36: Steuerventil
- 37: 2/2-Wege-Steuerventil
- 37.1: erster 2/2-Wege-Steuerventilanschluss
- 37.2: zweiter 2/2-Wege-Steuerventilanschluss
- 38: erstes Relaisventil
- 38.1: EPH-Relaisventilvorratsanschluss
- 38.2: EPH-Relaisventilentlüftungsanschluss
- 38.3: EPH-Relaisventilarbeitsanschluss
- 38.4: EPH-Relaisventilsteueranschluss
- 39: vierte Vorratsdruckleitung
- 40: zweite Entlüftungsleitung
- 41: Parkbremsdruckleitung
- 42: Redundanzanschluss
- 50: Anhängervorsteuereinheit
- 52: Anhängerhauptventileinheit
- 54: Einlassventil
- 54.1: erster Einlassventilanschluss
- 54.2: zweiter Einlassventilanschluss
- 56: Auslassventil
- 56.1: erster Auslassventilanschluss
- 56.2: zweiter Auslassventilanschluss
- 57: zweiter Vorsteuerleitung
- 58: dritte Entlüftungsleitung
- 60: zweites Relaisventil
- 60.1: TCV-Relaisventilvorratsanschluss
- 60.2: TCV-Relaisventilentlüftungsanschluss
- 60.3: TCV-Relaisventilarbeitsanschluss
- 60.4: TCV-Relaisventilsteueranschluss
- 62: Anhängerabrissventil
- 63: vierte Entlüftungsleitung
- 64: Bremsdruckleitung
- 65: dritte Vorsteuerleitung
- 66: erste Redundanzdruckleitung
- 68: zweite Redundanzdruckleitung
- 70: Redundanzventil
- 70.1: erster Redundanzventilanschluss
- 70.2: zweiter Redundanzventilanschluss
- 70.3: dritter Redundanzventilanschluss
- 72: dritte Redundanzdruckleitung
- 74: fünfte Vorratsdruckleitung
- 76: erstes Hauptventil
- 76.1: erster Hauptventilanschluss
- 76.2: zweiter Hauptventilanschluss
- 76.3: dritter Hauptventilanschluss
- 76.4: vierter Hauptventilanschluss
- 77: sechste Vorratsdruckleitung
- 78: fünfte Entlüftungsleitung
- 80: Sperrventil
- 80.1: erster Sperrventilanschluss
- 80.2: zweiter Sperrventilanschluss
- 80.3: Sperrventilsteueranschluss
- 82: 3/2-Wege-Steuerventil
- 82.1: erster 3/2-Wege-Steuerventilanschluss
- 82.2: zweiter 3/2-Wege-Steuerventilanschluss
- 82.3: dritter 3/2-Wege-Steuerventilanschluss
- 83: siebte Vorratsdruckleitung
- 84: sechste Entlüftungsleitung
- 85: vierte Vorsteuerleitung
- 100: Fahrzeugzug
- 102: Zugwagen
- 104: Anhänger
- 106: elektronisch steuerbares pneumatisches Bremssystem
- 108: Zentralmodul
- 110: Vorderachsmodulator
- 112, 113: Betriebsbremsen Vorderachse
- 114: Hinterachsmodulator
- 116, 117: kombinierten Bremszylinder Hinterachse
- 118, 119: Federspeicherbremsen
- 120: erste elektrische Leitung
- 122: zweite elektrische Leitung
- 124: dritte elektrische Leitung
- 126: erste Federspeicherbremsdruckleitung
- 127: zweite Federspeicherbremsdruckleitung
- VA: Vorderachse
- HA: Hinterachse
- EPH: Feststellbremseinheit
- TCV: Anhängersteuereinheit
- pF: Federspeicherdruck
- pV: Vorratsdruck
- pB: Bremsdruck
- pR: Redundanzdruck
- pVH: Anhängerversorgungsdruck
- p1: erster Vorsteuerdruck
- p2: zweiter Vorsteuerdruck
- p3: dritter Vorsteuerdruck
- S1: erstes Schaltsignal
- S2: zweites Schaltsignal
- S3: drittes Schaltsignal
- S4: viertes Schaltsignal
- S5: fünftes Schaltsignal

## Patentansprüche

1. Elektropneumatisches Steuermodul (1) für ein elektronisch steuerbares pneumatisches Bremssystem (106) für einen Fahrzeugzug (100) mit einem Zugwagen (102) und einem Anhänger (104), mit:
einem pneumatischen Vorratsanschluss (3), der mit einem Druckluftvorrat (3a) verbindbar ist, und einem Entlüftungsanschluss (4), der mit einer Entlüftung (5) verbunden ist,
einer Anhängersteuereinheit (TCV), die eine Anhängersteuer-Ventileinheit (8), einen Anhängerbremsdruckanschluss (22) und einen Anhängerversorgungsdruckanschluss (21) aufweist,
einer Feststellbremseinheit (EPH), die einen Federspeicher-Anschluss (6) für mindestens eine Federspeicherbremse (118, 119) für einen Zugwagen (102) und eine Feststellbrems-Ventileinheit (10) aufweist, und
einer elektronischen Steuereinheit (ECU) zum Steuern der Anhängersteuer-Ventileinheit (8) und der Feststellbrems-Ventileinheit (10),
**gekennzeichnet durch** ein Rückschlagventil (20), welches zwischen der Anhängersteuereinheit (TCV) und der Feststellbremseinheit (EPH) zum wenigstens teilweisen Entkoppeln der Anhängersteuereinheit (TCV) und der Feststellbremseinheit (EPH) angeordnet ist,
wobei die Feststellbremseinheit (EPH) eine Feststellbrems-Vorsteuereinheit (28) und eine Feststellbrems-Hauptventileinheit (30) aufweist, wobei die Feststellbrems-Vorsteuereinheit (28) von der elektronischen Steuereinheit (ECU) wenigstens ein Schaltsignal (S1, S2) empfängt und in Antwort darauf einen ersten Vorsteuerdruck (p1) an der Feststellbrems-Hauptventileinheit (30) aussteuert, die in der Folge einen Federspeicherbremsdruck (pF) an dem Federspeicheranschluss (6) aussteuert, und
wobei das Rückschlagventil (20) stromabwärts der Feststellbrems-Vorsteuereinheit (28) und stromaufwärts der Feststellbrems-Hauptventileinheit (30) in einer mit dem Vorratsanschluss (3) verbundenen pneumatischen Vorratsdruckleitung (39) angeordnet ist.

2. Elektropneumatisches Steuermodul (1) nach Anspruch 1, aufweisend ein Parkbremsventil (12), das bei Verbinden des Federspeicher-Anschlusses (6) mit dem Entlüftungsanschluss (4) so geschaltet wird, dass ein Bremsdruck (pB) an dem Anhängerbremsdruckanschluss (22) aussteuerbar ist.

3. Elektropneumatisches Steuermodul (1) nach Anspruch 2, wobei das Rückschlagventil (20) stromabwärts des Parkbremsventils (12) in einer mit dem Vorratsanschluss (3) verbundenen pneumatischen Vorratsdruckleitung (24) angeordnet ist.

4. Elektropneumatisches Steuermodul (1) nach Anspruch 2, wobei das Rückschlagventil (20) stromaufwärts des Parkbremsventils (12) in einer mit dem Vorratsanschluss (3) verbundenen pneumatischen Vorratsdruckleitung (24) angeordnet ist.

5. Elektropneumatisches Steuermodul (1) nach einem der vorstehenden Ansprüche, aufweisend ein gemeinsames Gehäuse (2), welches nur einen Vorratsanschluss (3) und einen Entlüftungsanschluss (4) aufweist.

6. Elektropneumatisches Steuermodul (1) nach einem der vorstehenden Ansprüche, aufweisend einen Redundanzanschluss (42) über den ein Redundanzdruck (pR) an der Anhängersteuereinheit (TCV) aussteuerbar ist zum redundanten Aussteuern des Bremsdrucks (pB).

7. Elektropneumatisches Steuermodul (1) nach einem der vorstehenden Ansprüche, wobei die Anhängersteuereinheit (TCV) eine Anhängervorsteuereinheit (50) zum Aussteuern wenigstens eines zweiten Vorsteuerdrucks (p2), und eine Anhängerhauptventileinheit (52) zum Aussteuern des Bremsdrucks (pB) aufweist.

8. Elektropneumatisches Steuermodul (1) nach Anspruch 6 und 7, wobei die Anhängervorsteuereinheit (50) ein Redundanzventil (70) aufweist, welches stromlos in einer offenen Schaltstellung ist, und wobei der Redundanzdruck (pR) über das Redundanzventil (70) an der Anhängerhauptventileinheit (52) bereitgestellt werden kann.

9. Elektropneumatisches Steuermodul (1) nach Anspruch 6, wobei der Redundanzanschluss (42) über eine erste Redundanzdruckleitung (66) mit dem Parkbremsventil (12) verbunden ist.

10. Elektropneumatisches Steuermodul (1) nach Anspruch 2, wobei das Parkbremsventil (12) ein pneumatisch gesteuertes Schaltventil (13) ist, welches einen pneumatischen Steuereingang (15) zum Aufnehmen eines pneumatischen Steuerdrucks (p2) aufweist, wobei das pneumatisch gesteuerte Schaltventil (13) bei Verbinden des Federspeicher-Anschlusses (6) mit dem Entlüftungsanschluss (4) so geschaltet wird, dass der Bremsdruck (pB) an dem Anhängerbremsdruckanschluss (22) aussteuerbar ist.

11. Elektropneumatisches Steuermodul (1) nach einem der vorstehenden Ansprüche, wobei die elektronische Steuereinheit (ECU) dazu eingerichtet ist die Feststellbrems-Ventileinheit (8) basierend auf einem elektronischen Feststellsignal (S1) zu veranlassen wenigstens ein Ventil (10) der Feststellbrems-Ventileinheit (8) so zu schalten, dass der Federspeicher-Anschluss (6) zum Entlüften des Federspeichers (6) mit einer Drucksenke (5) verbunden wird.

12. Zugwagen (102) eines Fahrzeugzugs (100) mit einem elektronisch steuerbaren pneumatischen Bremssystem (106) mit einem elektropneumatischen Steuermodul (1) nach einem der vorstehenden Ansprüche 1 bis 11.

## Claims

1. Electropneumatic control module (1) for an electronically controllable pneumatic brake system (106) for a vehicle combination (100) comprising a tractor vehicle (102) and a trailer (104), comprising:
a pneumatic supply connection (3) which can be connected to a compressed air supply (3a), and a vent connection (4) which is connected to a vent (5),
a trailer control unit (TCV), which has a trailer control valve unit (8), a trailer brake pressure connection (22) and a trailer supply pressure connection (21),
a parking brake unit (EPH), which has a spring accumulator connection (6), for at least one spring-loaded brake (118, 119) for a tractor vehicle (102), and a parking brake valve unit (10), and
an electronic control unit (ECU) for controlling the trailer control valve unit (8) and the parking brake valve unit (10),
**characterized by** a check valve (20) which is arranged between the trailer control unit (TCV) and the parking brake unit (EPH) for at least partially decoupling the trailer control unit (TCV) and the parking brake unit (EPH),
the parking brake unit (EPH) comprising a parking brake pilot control unit (28) and a parking brake main valve unit (30), the parking brake pilot control unit (28) receiving at least one switching signal (S1, S2) from the electronic control unit (ECU) and, in response to this signal, adjusting a first pilot control pressure (p1) at the parking brake main valve unit (30), which main valve unit subsequently adjusts a spring-loaded brake pressure (pF) at the spring accumulator connection (6), and
the check valve (20) being arranged downstream of the parking brake pilot control unit (28) and upstream of the parking brake main valve unit (30) in a pneumatic supply pressure line (39) connected to the supply connection (3).

2. Electropneumatic control module (1) according to claim 1, comprising a parking brake valve (12) which, when the spring accumulator connection (6) is connected to the vent connection (4), is switched such that a brake pressure (pB) can be adjusted at the trailer brake pressure connection (22).

3. Electropneumatic control module (1) according to claim 2, wherein the check valve (20) is arranged downstream of the parking brake valve (12) in a pneumatic supply pressure line (24) connected to the supply connection (3).

4. Electropneumatic control module (1) according to claim 2, wherein the check valve (20) is arranged upstream of the parking brake valve (12) in a pneumatic supply pressure line (24) connected to the supply connection (3).

5. Electropneumatic control module (1) according to any of the preceding claims, comprising a common housing (2) which has only one supply connection (3) and one vent connection (4).

6. Electropneumatic control module (1) according to any of the preceding claims, comprising a redundancy connection (42) via which a redundancy pressure (pR) can be adjusted at the trailer control unit (TCV) for the redundant adjustment of the brake pressure (pB).

7. Electropneumatic control module (1) according to any of the preceding claims, wherein the trailer control unit (TCV) comprises a trailer pilot control unit (50) for adjusting at least one second pilot control pressure (p2), and a trailer main valve unit (52) for adjusting the brake pressure (pB).

8. Electropneumatic control module (1) according to claims 6 and 7, wherein the trailer pilot control unit (50) comprises a redundancy valve (70), which is de-energized in an open switching position, and wherein the redundancy pressure (pR) can be provided via the redundancy valve (70) at the trailer main valve unit (52).

9. Electropneumatic control module (1) according to claim 6, wherein the redundancy connection (42) is connected to the parking brake valve (12) via a first redundancy pressure line (66).

10. Electropneumatic control module (1) according to claim 2, wherein the parking brake valve (12) is a pneumatically controlled switching valve (13) which has a pneumatic control input (15) for receiving a pneumatic control pressure (p2), wherein, when the spring accumulator connection (6) is connected to the vent connection (4), the pneumatically controlled switching valve (13) is switched in such a way that the brake pressure (pB) can be adjusted at the trailer brake pressure connection (22).

11. Electropneumatic control module (1) according to any of the preceding claims, wherein the electronic control unit (ECU) is configured to cause the parking brake valve unit (8) to switch at least one valve (10) of the parking brake valve unit (8) on the basis of an electronic parking signal (S1), in such a way that the spring accumulator connection (6) is connected to a pressure sink (5) in order to vent the spring accumulator (6).

12. Tractor vehicle (102) of a vehicle combination (100), comprising an electronically controllable pneumatic brake system (106) having an electropneumatic control module (1) according to any of the preceding claims 1 to 11.

## Revendications

1. Module de commande électropneumatique (1) pour un système de freinage pneumatique (106) pouvant être commandé électroniquement destiné à un train de véhicules (100) comportant un véhicule tracteur (102) et une remorque (104), comportant :
un raccord de réserve (3) pneumatique qui peut être raccordé à une réserve d'air comprimé (3a), et un raccord d'évacuation d'air (4) qui est raccordé à une évacuation d'air (5),
une unité de commande de remorque (TCV) qui présente une unité formant soupape de commande de remorque (8), un raccord de pression de freinage de remorque (22) et un raccord de pression d'alimentation de remorque (21),
une unité de frein de stationnement (EPH) qui présente un raccord d'accumulateur à ressort (6) pour au moins un frein à accumulateur à ressort (118, 119) pour un véhicule tracteur (102) et une unité à soupapes de frein de stationnement (10), et
une unité de commande électronique (ECU) pour la commande de l'unité formant soupape de commande de remorque (8) et de l'unité à soupapes de frein de stationnement (10),
**caractérisé par** une soupape anti-retour (20) qui est disposée entre l'unité de commande de remorque (TCV) et l'unité de frein de stationnement (EPH) pour le désaccouplement au moins partiel de l'unité de commande de remorque (TCV) et de l'unité de frein de stationnement (EPH),
dans lequel l'unité de frein de stationnement (EPH) présente une unité pilote de frein de stationnement (28) et une unité formant soupape principale de frein de stationnement (30), dans lequel l'unité pilote de frein de stationnement (28) reçoit au moins un signal de commutation (S1, S2) de l'unité de commande électronique (ECU) et, en réponse, commande une première pression pilote (p1) au niveau de l'unité formant soupape principale de frein de stationnement (30), laquelle commande ensuite une pression de frein à accumulateur à ressort (pF) au niveau du raccord d'accumulateur à ressort (6), et
dans lequel la soupape anti-retour (20) est disposée en aval de l'unité pilote de frein de stationnement (28) et en amont de l'unité formant soupape principale de frein de stationnement (30) dans une conduite de pression de réserve (39) pneumatique raccordée au raccord de réserve (3).

2. Module de commande électropneumatique (1) selon la revendication 1, présentant une soupape de frein de stationnement (12) qui, lorsque le raccord d'accumulateur à ressort (6) est raccordé au raccord d'évacuation d'air (4), est commutée de sorte qu'une pression de freinage (pB) peut être commandée au niveau du raccord de pression de freinage de remorque (22).

3. Module de commande électropneumatique (1) selon la revendication 2, dans lequel la soupape anti-retour (20) est disposée en aval de la soupape de frein de stationnement (12) dans une conduite de pression de réserve (24) pneumatique raccordée au raccord de réserve (3).

4. Module de commande électropneumatique (1) selon la revendication 2, dans lequel la soupape anti-retour (20) est disposée en amont de la soupape de frein de stationnement (12) dans une conduite de pression de réserve (24) pneumatique raccordée au raccord de réserve (3).

5. Module de commande électropneumatique (1) selon l'une des revendications précédentes, présentant un boîtier (2) commun qui présente uniquement un raccord de réserve (3) et un raccord d'évacuation d'air (4).

6. Module de commande électropneumatique (1) selon l'une des revendications précédentes, présentant un raccord de redondance (42) par l'intermédiaire duquel une pression de redondance (pR) peut être commandée au niveau de l'unité de commande de remorque (TCV) pour la commande redondante de la pression de freinage (pB).

7. Module de commande électropneumatique (1) selon l'une des revendications précédentes, dans lequel l'unité de commande de remorque (TCV) présente une unité pilote de remorque (50) pour la commande d'au moins une seconde pression pilote (p2), et une unité formant soupape principale de remorque (52) pour la commande de la pression de freinage (pB).

8. Module de commande électropneumatique (1) selon les revendications 6 et 7, dans lequel l'unité pilote de remorque (50) présente une soupape de redondance (70) qui est hors tension dans une position de commutation ouverte, et dans lequel la pression de redondance (pR) peut être fournie par l'intermédiaire de la soupape de redondance (70) au niveau de l'unité formant soupape principale de remorque (52).

9. Module de commande électropneumatique (1) selon la revendication 6, dans lequel le raccord de redondance (42) est raccordé à la soupape de frein de stationnement (12) par l'intermédiaire d'une première conduite de pression de redondance (66).

10. Module de commande électropneumatique (1) selon la revendication 2, dans lequel la soupape de frein de stationnement (12) est une soupape de commutation (13) à commande pneumatique qui présente une entrée de commande (15) pneumatique permettant de recevoir une pression de commande (p2) pneumatique, dans lequel la soupape de commutation (13) à commande pneumatique est commutée lors du raccordement du raccord d'accumulateur à ressort (6) au raccord d'évacuation d'air (4) de sorte qu'une pression de freinage (pB) peut être commandée au niveau du raccord de pression de freinage de remorque (22).

11. Module de commande électropneumatique (1) selon l'une des revendications précédentes, dans lequel l'unité de commande électronique (ECU) est configurée pour amener l'unité à soupapes de frein de stationnement (8) à commuter, sur la base d'un signal de stationnement électronique (S1), au moins une soupape (10) de l'unité à soupapes de frein de stationnement (8) de sorte que le raccord d'accumulateur à ressort (6) est raccordé à un puits de pression (5) pour l'évacuation d'air de l'accumulateur à ressort (6).

12. Véhicule tracteur (102) d'un train de véhicules (100), comportant un système de freinage pneumatique (106) pouvant être commandé électroniquement et comportant un module de commande électropneumatique (1) selon l'une des revendications 1 à 11.
